Europäisches Patentamt

European Patent Office

Office européen des brevets

(19)

(11) Veröffentlichungsnummer: **0 010 771**
**B1**

(12) **EUROPÄISCHE PATENTSCHRIFT**

(45) Veröffentlichungstag der Patentschrift: **16.02.83**

(21) Anmeldenummer: **79104286.4**

(22) Anmeldetag: **02.11.79**

(51) Int. Cl.³: **G 01 N 27/22,**
**H 01 G 4/06, B 32 B 15/08**

(54) Kapazitiver Feuchtefühler.

(30) Priorität: **06.11.78 DE 2848034**

(43) Veröffentlichungstag der Anmeldung:
**14.05.80 Patentblatt 80/10**

(45) Bekanntmachung des Hinweises auf die Patenterteilung:
**16.02.83 Patentblatt 83/7**

(84) Benannte Vertragsstaaten:
**FR GB IT SE**

(56) Entgegenhaltungen:
**DE - A - 1 573 217**
**DE - A - 2 063 506**
**DE - A - 2 110 247**
**DE - A - 2 365 826**
**DE - A - 2 418 301**
**DE - A - 2 702 487**
**DE - B - 1 229 321**
**DE - B - 2 010 220**
**US - A - 3 350 941**
**US - A - 3 559 456**
**US - A - 4 080 593**

(73) Patentinhaber: **SIEMENS AKTIENGESELLSCHAFT**
**Berlin und München Wittelsbacherplatz 2**
**D-8000 München 2 (DE)**

(72) Erfinder: **Heywang, Hermann, Dr.**
**Balanstrasse 310**
**D-8000 München 90 (DE)**
Erfinder: **Kammermaier, Johann, Dr.rer.nat.**
**Ziehrerstrasse 19**
**D-8025 Unterhaching (DE)**
Erfinder: **Rauhut, Joachim, Dipl.-Ing.**
**Bayrischzellerstrasse 27**
**D-8000 München 90 (DE)**

Courier Press, Leamington Spa, England.

## Kapazitiver Feuchtefühler

Die vorliegende Erfindung betrifft einen kapazitiven Feuchtefühler, welcher einen Träger aus einer nicht feuchteempfindlichen Metallfolie enthält, welche eine feuchteempfindliche Kunststoffschicht trägt, auf der ein feuchtedurchlässiger elektrisch leitender Belag aus einer Metallschicht angeordnet ist.

Ein derartiger Feuchtefühler ist aus der DE—A—27 02 487 bekannt. Dort ist als Dielektrikum eine monomolekulare Schicht einer organischen Verbindung mit hydrophilen Gruppen angegeben. Derartige Schichten sind schwierig aufzubringen, ergeben nichtlineare Kapazitätsänderungen und sind insbesondere bei Anwesenheit von Feuchte wenig temperaturstabil.

Aus der DE—A—15 73 217 ist ein Feuchtefühler bekannt, bei dem in einem Halterahmen ein Träger aus einem nicht feuchteempfindlichen Material eingespannt ist. Auf diesen Träger sind feuchteempfindliche Schichten zu beiden Seiten aufgebracht Z. B. durch Kleben. Diese feuchteempfindlichen Schichten sind wiederum mit elektrisch leitfähigen, aufgesprühten Schichten belegt. Diese bilden die Beläge des Kondensators und werden am Halterahmen kontaktiert. Dieser Aufbau ist relativ aufwendig. Er ist einer rationellen Serienfertigung nicht zugänglich. Als Material für die feuchteempfindlichen Schichten ist eine größere Zahl von Cellulosederivaten und anderen sehr feuchteempfindlichen Stoffen, u. a. modifiziertes Polyamid, angegeben. Diese Stoffe sind jedoch bei erhöhter Temperatur in feuchter Atmosphäre instabil, die Feuchteabhängigkeit der Kapazität mit diesen Stoffen gebildeter Kondensatoren ist nicht linear, die Kapazität ist stark temperaturabhängig.

Die Aufgabe, die der vorliegenden Erfindung zugrunde liegt, besteht bei einem Feuchtefühler der eingangs be schriebenen Art darin, einen in Serienfertigung mit geringem Aufwand herstellbaren Aufbau anzugeben, welcher eine lineare Abhängigkeit der Kapazität von der Feuchte besitzt und thermisch und chemisch ausreichend beständig ist.

Ein derartiger Feuchtefühler weist gemäß der Erfindung die Merkmale auf, daß die Kunststoffschicht eine Polyimidfolie ist und daß diese auf die Metallfolie durch eine dünne Kleberschicht aufgeklebt ist. Ein Verfahren zum Herstellen des Feuchtefühlers bildetden Gegenstand des Anspruchs 3.

Eine besonders hohe thermische und chemische Beständigkeit wird erreicht, wenn die Metallfolie aus einem nichtrostenden Eisen-Nickel-Chrom-Stahl besteht. Die vorgeschlagene Eisen-Nickel-Chrom-Stahl-Folie, die gleichzeitig als Träger und als eine Elektrode dient, hat den Vorteil, daß sie völlig feuchteunempfindlich ist, daß sie unmittelbar kontaktiert werden kann und daß auf ihre glatte Oberfläche sehr dünne feuchteempfindliche Kunststoffschichten aufgebrackt werden können. Auch die Aufdampfung der zweiten Belagschicht ist ohne weiteres möglich, da die hohe Wärmeableitung der Metallfolie auch bei der Aufdampfung von hochschmelzenden Edelmetallen auf die feuchteempfindliche Kunststoffschicht eine unzulässige Erwärmung der Kunststoffschicht verhindert.

Eine derartige Stahlfolie weist eine besonders glatte Oberfläche auf, so daß die Kleberschicht ggf. sehr dünn gehalten werden kann und daher keinen nennenswerten Einfluß auf den Grad der Feuchteempfindlichkeit des Dielektrikums ausübt. Ein derartiger Stahl gewährleistet, daß der Träger auch bei längerem Betrieb des Feuchtefühlers nicht oxydiert oder anderweitig korridiert. Der genannte Kunststoff kann auch in gelöster Form als Lack unmittelbar auf die Metallfolie aufgebracht sein. Bei Polyimid verfährt man dazu folgendermaßen: Auf die Metallfolie wird zunächst eine lösliche Polyimidvorstufe im Lackierverfahren aufgetragen und aus der Lackschicht anschließend das Lösungsmittel durch Trocknen entfernt. Die so beschichtete Metallfolie wird bei einer Temperatur von mindestens 275°C getempert, wobei die für die Löslichkeit der Polyimidvorstufe verantwortlichen Komponenten pyrolytisch verflüchtigt werden und unlösliche Polyimidschichten entstehen, deren chemische Zusammensetzung und Feuchteempfindlichkeit freitragenden Polyimidfolien entspricht. Dieses Verfahren ist an sich bekannt. Bei der vorliegenden Erfindung ist von Vorteil, daß der zur Herstellung dünner Polyimidlackschichten notwendige Temperprozeß ohne thermische Schädigung der Trägerfolie durchgeführt werden kann, da diese aus Metall besteht. Polyimid ist aufgrund seiner mit der relativen Luftfeuchte linear wachsenden und von der Temperatur nur gering beeinflußten Zunahme der Dielektrizitätskonstante zum Bau kapazitiver Feuchtefühler besonders gut geeignet. Aus Polyimid können auf diese Weise Schichten mit Dicken unterhalb 5 $\mu$m hergestellt werden. Diese sehr kleinen Schichtdicken ergeben besonders schnell ansprechende Feuchtefühler.

Die Metallschicht, die den zweiten Belag bildet, besteht vorteilhaft aus einer dünnen Goldschicht, durch die das Wasser ohne nennenswerte Behinderung hindurchtreten kann. Goldschichten bestehen unterhalb einer Auftragdicke von circa 5 nm aus inselartig angeordneten, aufgrund von Tunneleffekten jedoch leitend verbundenen Partikeln, zwischen denen Wassermoleküle ungehindert in die Kunststoffschicht oder aus der Kunststoffschicht in den Luftraum diffundieren können. Auf dieser Goldschicht können mit besonders geringem Aufwand Anschlüsse für die Kontaktierung dadurch hergestellt werden, daß auf die Metallschicht ein elektrischer Anschlußdraht mittels einer siebdruckfähigen, elektrisch leitenden Epoxyharzmasse aufgeklebt wird. Derartige elektrisch leitende Epoxyharzmassen enthalten in der Regel feinverteiltes Metall oder auch fein verteilten Kohlenstoff oder dergleichen zur Herstellung der Leitfähigkeit. Diese Leitfähigkeit reicht für die hier geforderte Belastung aus. Die Haftung einer derartigen Epoxyharzmasse ist im vorliegenden Fall besonders gut, da die Haftung durch die Goldschicht hindurch auf dem Kunststoff erfolgen kann.

Eine weitere Möglichkeit zur Kontaktierung der dünnen Goldelektrode besteht darin, daß diese in einem Teilbereich so verstärkt wird, daß Anschlußdrähte gebondet, angeschweißt oder angelötet werden können.

Um besonders kurze Ansprechzeiten zu erreichen, ist es vorteilhaft, daß mit dem Träger zunächst eine dünne, für Wasser durchlässige Goldschicht und darüber eine feuchtempfindliche Kunststoffschicht und eine zweite wasserdurchlässige Goldschicht angeordnet sind und daß ein Teil des Trägers derart weggeätzt ist, daß der verbliebene Teil des Trägers einen Spannrahmen für die Kunststoffschicht mit den Goldelektroden bildet. Bei dieser Aufbauform sind auch wegen ihrer geringen Dicke nicht selbsttragende Schichten einsetzbar, da eine Beanspruchung des Bauelementes durch Fertigungsvorgänge nach dem Abätzen der entsprechenden Bereiche der Trägerfolie nicht mehr erfolgt und die für die Handhabung notwendige mechanische Festigkeit durch den verbliebenen Spannrahmen gewährleistet ist. Dies verkürzt die Ansprechzeit des Feuchtefühlers ganz erheblich, da diese dem Quadrat der Länge des in Normalenrichtung verlaufenden Diffusionsweges der $H_2O$-Moleküle in der Kunststoffschicht proportional ist. Diese Länge ist bei beidseitigem Luftzutritt gleich der halben Schichtdicke.

Ein erfindungsgemäßer Feuchtefühler wird besonders rationell hergestellt, indem auf eine Metallfolie die übrigen Schichten im Bandverfahren aufgebracht werden und das Band anschließend in einzelne Feuchtefühler zertrennt wird. Dabei kann die Kunststoffschicht durchgehend aufgebracht werden, während die Edelmetallschicht vorteilhaft in Flecken der im Feuchtefühler benötigten Größe aufgedampft wird, während die übrigen Bereiche abgedeckt werden. Die Abdeckung kann durch mitlaufende Blenden erfolgen.

Die Erfindung wird anhand von zwei Figuren näher erläutert. Die Figuren zeigen Ausführungsformen eines erfindungsgemäßen Feuchtefühlers in geschnittener Ansicht.

Auf eine Metallfolie 1 sind eine Kunststoffolie 3 aus Polyimid und eine mit dieser stoffschlüssig verbundene Goldelektrode 4 mittels einer Kleberschicht 2 aufgeklebt. Die Kunststoffschicht 3 kann auf die Metallfolie 1 auch auflackiert sein. Die Goldschicht 4 ist durch einen Kontaktierungsdraht 5 kontaktiert, welcher durch eine elektrisch leitende Epoxyharzmasse 6 mit der Goldelektrode elektrisch leitend verbunden ist. Ein zweiter Kontaktierungsdraht 7 ist mit der Metallfolie 1 verlötet.

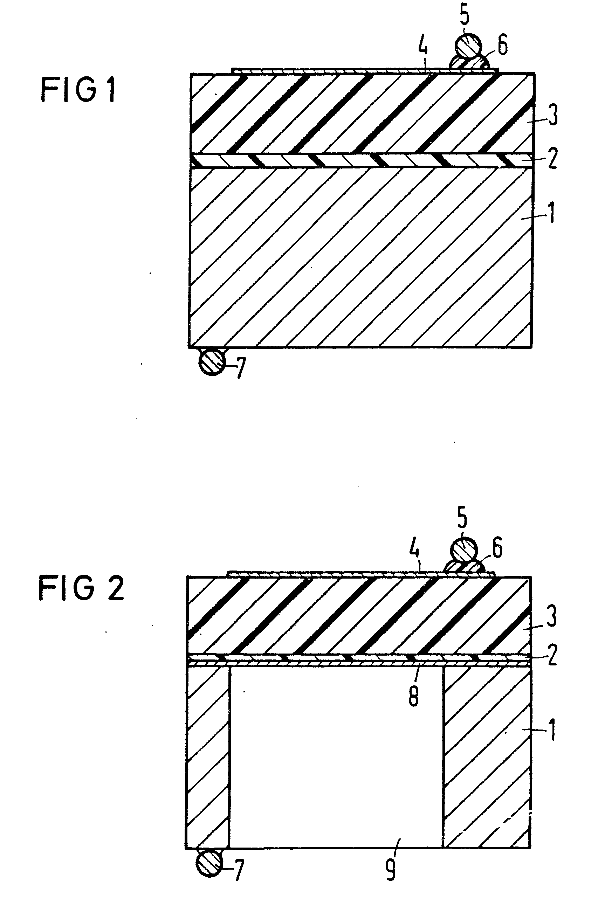

Im Beispiel der Figur 2 ist auf die Metallfolie 1 zunächst eine Goldschicht 8 und auf diese die weitere Schichtenfolge 2 bis 4 aufgebracht. In die Metallfolie 1 ist eine Öffnung 9 hineingeätzt. Die verbleibenden Teile der Metallfolie 1 dienen als Halterahmen für die Schichten 2 bis 4 und 8.

**Patentansprüche**

1. Kapazitiver Feuchtefühler, welcher einen Träger (1) aus einer nicht feuchteempfindlichen Metallfolie enthält, welche eine feuchteempfindliche, isolierende Kunststoffschicht (3) trägt, auf die ein feuchtedurchlässiger, elektrisch leitender Belag (4) aus einer Metallschicht angeordnet ist, dadurch gekennzeichnet, daß die Kunststoffschicht (3) eine Polyimidfolie ist und daß diese auf die Metallfolie durch eine dünne Kleberschicht (2) aufgeklebt ist.

2. Kapazitiver Feuchtefühler nach Anspruch 1, dadurch gekennzeichnet, daß auf dem Träger (1) zunächst eine dünne, für Wasser durchlässige Goldschicht (8), darauf die feuchteempfindliche Kunststoffschicht (3) und auf letzterer der wasserdurchlässige leitende Belag in Form einer weiteren Goldschicht (4) angeordnet sind, und daß ein Teil des Trägers (1) so weggeätzt ist, daß ein Spannrahmen für die Kunststoffschicht (3) mit den Goldschichten (4) bestehen bleibt.

3. Verfahren zur Herstellung eines Feuchtefühlers nach Anspruch 2, dadurch gekennzeichnet, daß auf die Metallfolie (1) die übrigen Schichten im Bandverfahren aufgebracht werden und das Band anschließend in einzelne Feuchtefühler zertrennt wird.

4. Verfahren nach Anspruch 3, dadurch gekennzeichnet, daß die feuchteempfindliche Kunststoffschicht (3) aus Polyimid in der Weise erzeugt wird, daß auf die Metallfolie zunächst eine Polyimidvorstufe als Lösung aufgetragen wird, anschließend das Lösungsmittel ausgetrieben wird und daß die so beschichtete Metallfolie bei einer Temperatur von mindestens 275°C getempert wird.

**Revendications**

1. Détecteur d'humidité capacitif, comportant un support (1) fait avec une feuille métallique insensible à l'humidité et portant une couche de matière plastique (3) isolante et sensible à l'humidité, et sur laquelle est disposé un revêtement (4) d'une couche métallique perméable à l'humidité et électriquement conductrice, caractérisé par le fait que la couche de matière plastique (3) est une feuille de polyimide et que celle-ci est collée sur la feuille métallique par une mince couche d'adhésif (2).

2. Détecteur d'humidité capacitif selon la revendication 1, caractérisé par le fait que sont disposées sur le support (1) d'abord une mince couche d'or (8) perméable à l'eau, puis la couche de matière plastique (3) sensible à l'humidité et sur cette dernière le revêtement conducteur et perméable à l'eau, sous la forme d'une seconde couche d'or (4), et qu'une partie du support (1) est enlevée de telle manière par attaque chimique qu'il subsiste un cadre de tension pour la couche de matière plastique (3) avec les couches d'or (4).

3. Procédé pour la fabrication d'un détecteur d'humidité selon la revendication 2, caractérisé par le fait que sur la feuille métallique (1) sont disposées, selon le procédé de rubanerie, les autres couches et qu'ensuite le ruban est subdivisé en détecteurs d'humidité individuels.

4. Procédé selon la revendication 3, caractérisé par le fait que la couche de matière plastique (3) de polyimide sensible à l'humidité est produite dans ce mode de réalisation que d'abord une couche primaire de polyimide soluble est déposée sur la feuille métallique, que ensuite le solvant est évacué et que la feuille métallique ainsi revêtue est traitée thermiquement à une température d'an moins 275°C.

**Claims**

1. A capacitive moisture sensor comprising a carrier (1) made of metal foil which is not sensitive to moisture and which carries a moisture-sensitive, insulating synthetic resin layer (3) on which a moisture-permeable, electrically conductive coating (4) in the form of a metal layer is arranged, characterised in that the synthetic resin layer (3) is a polyimide film and that the latter is stuck onto the metal layer by means of a thin adhesive layer (2).

2. A capacitive moisture sensor according to Claim 1, characterised in that on the carrier (1), there is first arranged a thin gold layer (8) which is permeable to water, thereon the moisture-sensitive film (3) and on this the water-permeable conductive coating, in the form of a further gold layer (4); and that a part of the carrier (1) is etched away in such a manner that a clamping frame for the synthetic resin layer (3) with the gold layer (4) remains.

3. A process for the production of a moisture sensor according to Claim 2, characterised in that the other layers are applied onto the metal foil (1) by the strip technique and the strip is subsequently divided into individual moisture sensors.

4. The process according to claim 3, characterised in that the moisture-sensitive synthetic resin layer (3) of polyimide is produced in a manner that first a film of polyimide is applied on the metal foil in a solution, that subsequently the solvent is removed and that finally the metal foil is tempered at a temperature of at least 275°C.

FIG 1

FIG 2